# EUROPEAN PATENT SPECIFICATION

(11) **EP 0 516 706 B1**
(45) Date of publication and mention of the grant of the patent: **08.11.1995**
(21) Application number: 91905010.4
(22) Date of filing: 15.02.1991
(51) Int. Cl.: B26D 1/54, B27B 13/10

(54) **A GUIDE FOR A CUTTING BAND**
FÜHRUNG FÜR SÄGEBÄNDER
GUIDE POUR RUBAN DE COUPE

(30) Priority: 20.02.1990 DK 448/90
(43) Date of publication of application: 09.12.1992
(73) Proprietor: HYLDIG, Jens Martin Hovmoller, DK-4000 Roskilde (DK)
(72) Inventor: HYLDIG, Jens Martin Hovmoller, DK-4000 Roskilde (DK)
(74) Representative: Larsen, Hans Ole
(86) International application number: DK9100046
(87) International publication number: WO9112937

(56) References cited:
- US-A- 2 059 595

## Description

The invention relates to a guide for an endless cutting band in the form of a saw or knife blade running over at least two wheels in a cutting machine, as described in the preamble of claim 1.

When cutting by means of band saws and band cutting machines it is a large problem that the cutting band does not move in a sufficiently calm manner and that it does not remain in the same cutting position.

This is due to the fact that the guiding of the cutting band is not effected close to the item to be cut but rather by the rollers placed nearest to the workpiece on which the band runs. This often creates a large span which causes the band to twist and bend when loaded during operation.

This causes an unsteady cutting which is therefore not particularly accurate while at the same time producing a lot of noise. Add to this the load to which the band is subjected which often requires a more powerfully dimensioned cutting band which in turn causes it to become more expensive, creates greater saw kerfs and increases energy consumption.

It is known to provide such band cutting machines with guide means in the form of a supporting roller on each side of the band and a roller towards the rear of the band. These known supporting rollers are, however, quickly worn and must therefore often be adjusted or replaced; also scattered wear traces often occur on particularly the rear supporting roller since the rollers must be brought to rotate individually by friction with the band. This results in an unsteady performance of the band and as already mentioned in more frequent replacement of the rollers.

From US patent no. 2,059,595 it is known to make a guide for a cutting band, which comprises two guide rings being freely rotatable mounted on a shaft. These guide rings are mounted on each side of a separate roller as part of a meat cutting machine. However, the invention disclosed in the US patent is not a precision tool and is not suited for performing precision work. Thus, guide rings primarily made of hard wood will during use be exposed to wear and tear which will cause the guiding to become unprecise and unregular. The mentioned guide means are therefore not applicable for a precision tool. Moreover, blades of different thickness can not be used in the mentioned cutting machine.

It is the object of the invention to overcome these shortcomings and disadvantages of the known cutting machines and guide means.

This is obtained by letting the guide means be adjustably tightened to the cutting band, and by providing the guide rings at the interior of the side faces with a bottom face or with one or a number of bottom rings against which the front or rear edge of the cutting band can run. A precise guiding of the endless cutting band is thereby obtained which, when the need arises, can be currently adjusted. This has operational advantages, since it will become possible to perform a precise guiding and thus a precise cut. Furthermore, it is a financial advantage to be able to adjust the guide means rather than replacing them. Also, a flexible mounting of the entire cutting arrangement is obtained since also different types of cutting bands of different lengths and thicknesses can be used.

The rotation of the guide means ensures that sporadic wear of the guide faces will never occur and that performance remains steady permitting accuracy and a cutting of a hitherto unknown good quality. The guide can be fitted close to the workpiece whereby the most accurate cutting is obtained. Guiding is furthermore performed without any significant noise development, and since the loading of the band is reduced, the band can be given smaller dimensions which makes it cheaper to produce and operate.

As presented in claim 2, by making the contact faces hard-wearing, i.e. harder, friction against the band is considerably reduced thereby prolonging the life of the band.

As presented in claim 3, by arranging exchangeable spacing or tolerance rings between the guide rings, the guide can be adjusted to any required band thickness and, when worn one or a number of the rings can be replaced or removed.

As presented in claim 4, by using a V-shaped groove with a double-edged band knife, a hitherto unknown good guiding is obtained especially behind the band without damaging the cutting edge.

As presented in claim 5, by fitting a scraper plate inside the guide groove, this can be kept free from cutting refuse, thus maintaining the contact of the band to the guide faces.

Finally it is expedient, as presented in claim 6, to fit a dust collecting plate on each side of the band in order to keep the band clean.

In the following the invention will be described in closer detail with reference to the drawing, in which
- fig. 1: is a sectional view through a guide for a double-edged knife blade,
- fig. 2: is a section of the cutting knife band between the guide faces and the V-groove,
- fig. 3: is a sectional view through a double guide for a double-edged knife band,
- fig. 4: shows this double guide seen from above,
- fig. 5: is a sectional view through a guide for a band saw blade,
- fig. 6: is a partial section through this guide seen from the side,
- figs. 7 and 8: are sectional views through two examples of guides with hardened steel wearing parts,
- fig. 9: is a sectional view through a guide with ceramic wearing parts,
- fig. 10: is a sectional view of a guide with a recess at one side face,
- figs. 11 - 12: are sectional views of a guide mean with a double recess,
- figs. 13 and 14: are sectional views of a guide with cleaning plates,
- fig. 15: is a sectional view through this guide, and
- fig. 16: shows this guide seen from above.

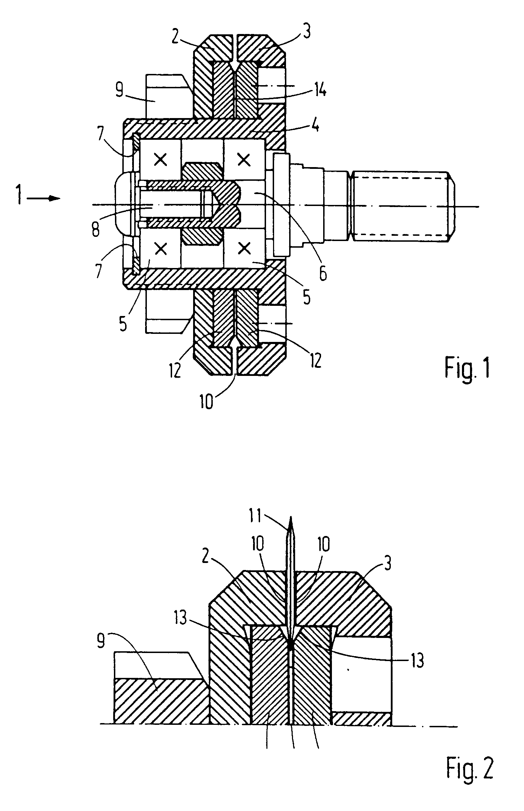

Figs. 1 and 2 show an example of a rotary guide 1 which is mounted on a shaft 6 which can be attached to a machine part.

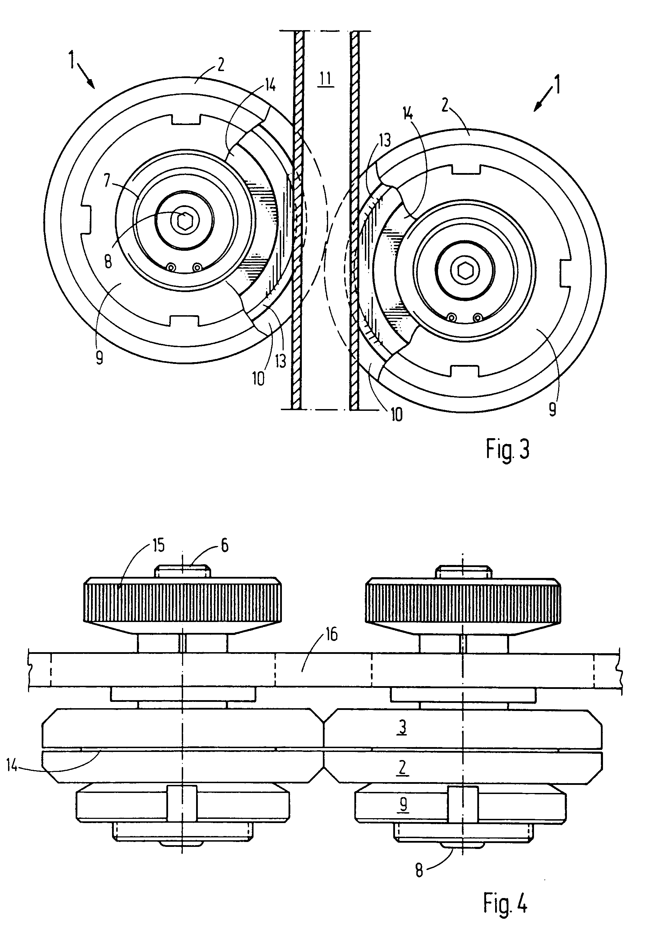

An example of such a fitting is shown in fig. 4 where the shaft 6 is attached to a machine part 16 by means of a nut 15.

On the shaft 6 two ball bearings 5 are arranged having an intermediate ring and being attached in a manner known per se by means of a bolt 8 at the end of the shaft, as shown in fig. 1.

On the outside of the bearings 5 a hub 4 is provided which is held by means of a locking ring 7 in an interior groove in the hub.

At its end the hub 4 is provided with a flange forming one of the lateral guide rings 3 which on the outside forms a side face 10.

The opposite side face is formed in a guide ring 2 being attached to the hub 4 by means of a nut 9.

Between these lateral guide rings 2, 3 there is provided a recess for a pair of wearing rings 12 each having a bevel 13 extending on a plane at right angles to the axis of rotation and in the centre of the two lateral guide faces 10.

Finally, one or a number of distance rings 14 are provided between the steel rings 12.

All the mentioned parts on the hub 4 are tightened together by means of the nut 9 in such a manner that the parts form a wheel which easily turns on ball bearings on the shaft 6.

The guide shown in figs. 1 and 2 is especially suited for double-edged knife bands 11 in that this allows the band to be laterally guided by means of the side faces 10, and at the rear edge by the V-groove formed by the bevels 13 in that, as shown more clearly in fig. 2, guiding and control is effected on both sides of the knife edge without causing damage to the edge proper, because this extends in the groove between the rings 12 which by means of distance rings 14 are at a certain distance to each other.

In this manner a double-edged band can be guided and supported at its rear edge, thus ensuring a good support during the cutting of the band.

Fig. 3 shows an example of the use of the guide shown in figs. 1 and 2 for construction of a double guide for a double-edged cutting band 11. As is seen from fig. 3, the guides 1 are slightly staggered in the direction of motion of the knife in order to guide both knife edges in the two V-grooves 13 just as the sides of the knife 11 can be guided in the full width of the knife by the two sets of lateral guides 10.

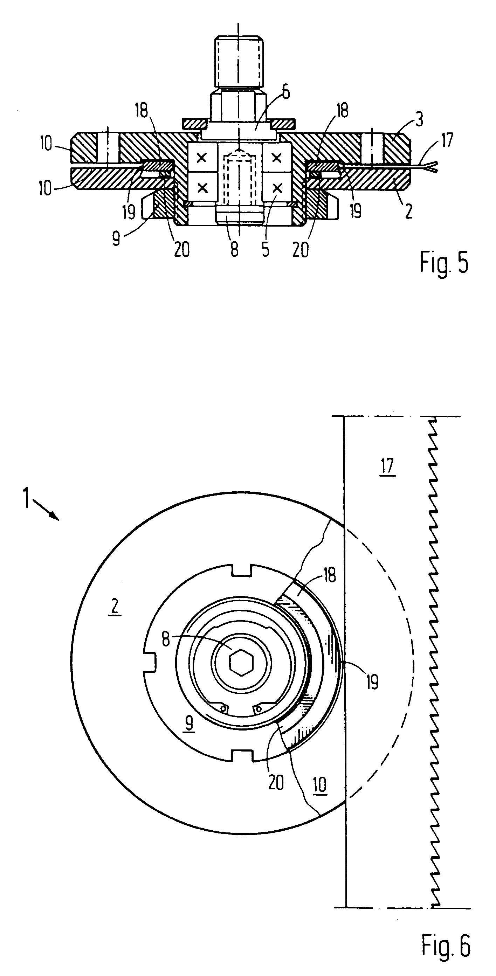

Figs. 5, 6 and 7 show an embodiment of a guide 1 whose side piece is formed by side faces 10 being arranged directly on the side rings 2, 3.

These rings 2, 3 can be made of a lighter material such as aluminium, and the side faces 10 can be configured as a hard wear-resisting coating thereon.

The end guide face or bottom face 19 is a steel ring or a similar hard material 18 which is held in a recess and with a distance ring 20 at the side for the formation of the required distance between the side faces 10, corresponding to the thickness of a saw band 17, which is thereby allowed to run just between the lateral guides 10.

Instead of aluminium the rings 2, 3 can be made of hardened steel.

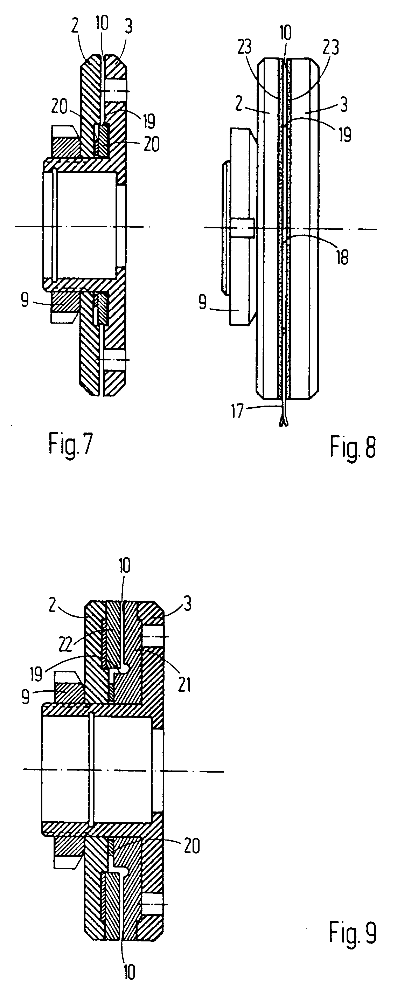

Fig. 8 shows an example of a guide made of a light material, such as aluminium which is subsequently provided with wearing rings 23 for the formation of the lateral guides 10, and with a ring portion 18 for the formation of the rear guide face 19 for the rear edge of the saw band 17.

Fig. 9 shows an example of a guide with aluminium guide rings 2, 3 which are provided with a ceramic coating 21 at one side and which furthermore have a ring portion at the interior for the formation of the bottom guide face 19, and which at the other side are provided with a ring 22 for the formation of the opposite wear face.

Also here one or a number of distance rings 20 are provided for adjustment of the distance between the lateral guide faces 10.

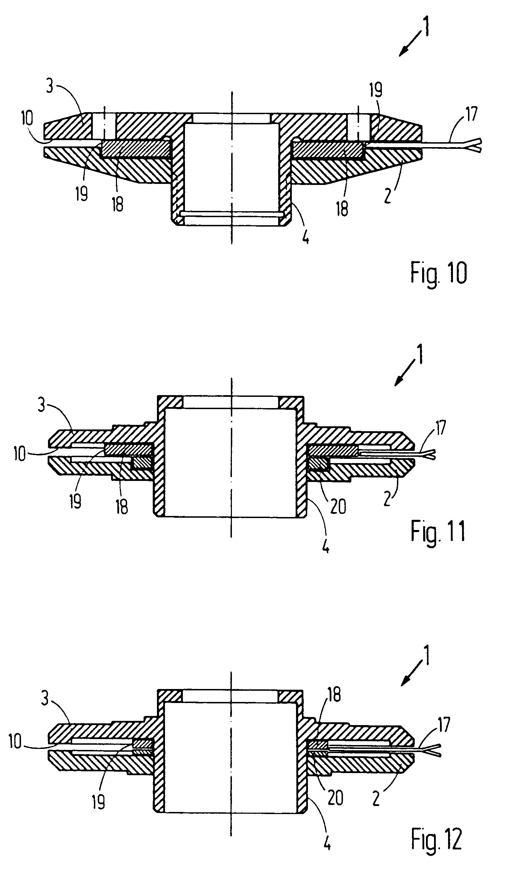

Fig. 10 shows an example of a guide 1 without recess in the one lateral guide 3. The recess is found only in the other lateral guide 2 so that the steel ring 18 can be inserted for determination of the width between the lateral guide faces 10 and the bottom guide face 19 for the saw blade 17.

Working of the one lateral guide 3 is hereby recuced which simplifies manufacture of the guide considerably.

Such a guide is advantageously made of cast steel which is subsequently hardened.

Finally, figs. 11 and 12 show an example of a guide 1 with lateral guide rings 2, 3 whose recess is uniform and so wide that steel rings 18 with different largest diameters can be inserted for the formation of the bottom face 19 which can be adapted to saw bands 17 of varying widths. Hereby is obtained a universal guide equipment in which distance rings 20 can be inserted as previously mentioned.

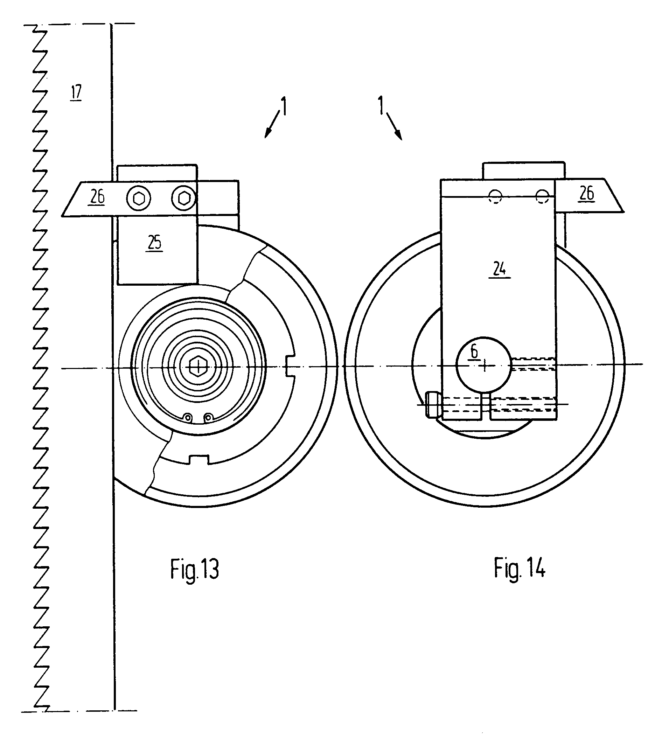

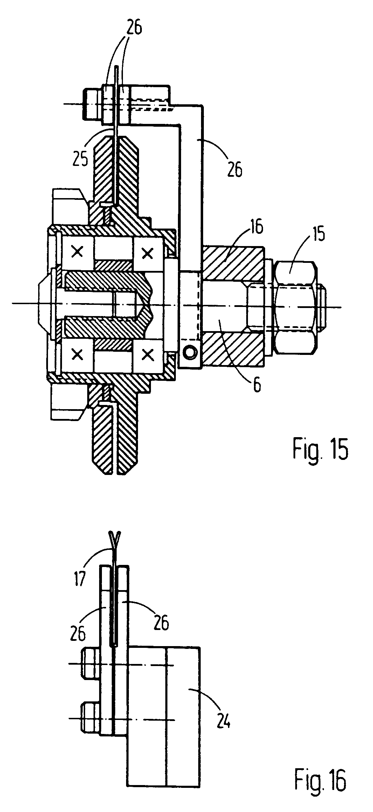

If such materials are to be cut which tend to deposit either in the guide groove or on the band, it is an advantage to fit a cleaning device, as shown in figs. 13-16.

A holder 24 is secured on the shaft 6, and to this holder there is attached partly a dust collecting plate 25 extending down into the guide groove behind the saw band 17 as shown in figs. 13 - 16, and partly a dust collecting plate 26 extending on both sides of the band 17 thereby cleaning the band of dust and other refuse, such as saw meal during operation.

In this manner the guide can be used for cutting knives or cutting saws in slaughterhouse machinery or the like, thereby eliminating any risk of disturbing the performance of the guide or the band.

By means of this guide there is thus ensured the best possible cutting accuracy since all parts rotate simultaneously and easily by friction with the band when this runs. Irregular wear is hereby avoided and the optimum rotation symmetrical faces remain intact.

This also gives low noise and, as already mentioned, a hitherto unobtainable steady running of the band thus facilitating a precise cutting operation.

As one or more of the parts are worn the equipment is easily disassembled permitting replacement or partial removal of distance rings so that the distance between the lateral guide faces is constantly adapted to the thickness of the band.

## Claims

1. A guide for an endless cutting band in the form of a saw or knife blade running over at least two wheels in a cutting machine, which guide (1) comprises two guide rings (2, 3) fitted on the cutting machine, the said rings being assembled and being freely rotatable on a shaft (6) and having side faces (10) opposed to each other between which the rear portion of the cutting band (11, 17) can run, which side faces (10) extend parallel to each other on a plane at right angles to the axis of rotation of the rings and at a distance to each other which is slightly larger than the thickness of the cutting band (11, 17), **characterized** in that said guide rings (2, 3) can be adjustably tightened to the cutting band (11, 17), and in that the guide rings (2, 3) at the interior of the side faces (10) are provided with a bottom face (13, 19) or with one or a number of bottom rings (12, 18, 21) against which the front or rear edge of the cutting band (11, 17) can run.

2. A guide according to claim 1, **characterized** in that the side faces (10) and the bottom face (13, 19) are provided with hard-wearing surfaces.

3. A guide according to claims 1 and 2, **characterized** in that one or a number of distance rings (14, 20) are provided between the guide rings (2, 3) for adjustment of the distance between the side faces.

4. A guide according to claims 1-3 for use in a cutting machine with double-edged knife blade (11), **characterized** in that the bottom ring (12) is provided with a V-groove (13) for the rear cutting edge. (Figs. 1 and 2).

5. A guide according to claims 1-4, **characterized** in that a holder (24) is provided on the cutting machine (16, 6) said holder having a stationary plate (25) projecting in between the side faces (10) to the bottom face (13, 19) behind the cutting band (11, 17) for the cleaning of the guide groove.

6. A guide according to claims 1-5, **characterized** in that a stationary dust collecting plate (26) is provided on the cutting machine on each side of the cutting band (11, 17) for the cleaning thereof.

## Patentansprüche

1. Führung für ein Endlossägeband in Form eines über wenigstens zwei Rollen innerhalb einer Schneidemaschine laufenden Sage- oder Messerblattes, welche Führung (1) zwei an die Schneidemaschine angepaßte Führungsringe (2, 3) umfaßt, die frei drehbar auf einer Welle (6) aufgenommen sind und voneinander beabstandete Stirnflächen (10) haben, zwischen denen der Rücken des Sägebands (11, 17) hindurchlaufen kann und die sich rechtwinklig zur Drehachse der Ringe parallel zueinander in einem gegenseitigen Abstand, der etwas größer ist als die Stärke des Sägebandes (11, 17), erstrecken,
dadurch gekennzeichnet,
- daß die besagten Ringe (2, 3) relativ zum Sägeband (11, 17) verstell- und zusammenziehbar sind und
- daß die führungsringe (2, 3) im Zentralbereich der Stirnflächen (10) mit einer Grundfläche (13, 19) oder einer Anzahl von Bodenringen (12, 18, 21) versehen sind, denen gegenüber liegend die vordere oder hintere Schneidekante des Sägebandes (11, 17) verlaufen kann.

2. Führung nach Anspruch 1, dadurch gekennzeichnet, daß die Stirnflächen (10) und/oder die Bodenfläche (13, 19) mit einer schwer abnutzbaren Oberfläche versehen sind/ist.

3. Führung nach Anspruch 1 und 2, dadurch gekennzeichnet, daß zur Einstellung des Abstandes zwischen den Stirnflächen (10) ein oder eine Anzahl von Abstandsring/en (14, 20) zwischen den Führungsringen (2, 3) zur Einstellung des Abstandes zwischen den Stirnflächen (10) vorgesehen ist/sind.

4. Führung nach einem der Ansprüche 1 bis 3 zur Verwendung in einer Schneidemaschine mit doppelschneidiger Messerklinge, dadurch gekennzeichnet, daß der Bodenring (12) mit einer V-förmigen Nut (13) für die hintere Schneidekante versehen ist (Figs. 1 und 2).

5. Führung nach einem der Ansprüche 1 bis 4, dadurch gekennzeichnet,
- daß ein Halter (24) auf der Schneidemaschine (6, 16) angeordnet ist und
- daß der besagte Halter (24) eine feststehende Platte (25) zur Reinigung der Führungsnut (13) aufweist, die zwischen die Stirnflächen (10) bis zur Grundfläche (13, 19) hinter das Schneideband (11, 17) vorspringt.

6. Führung nach einem der Ansprüche 1 bis 5, dadurch gekennzeichnet, daß eine Staubsammelplatte (26) an der Schneidemaschine auf jeder Seite des Sägebandes (11, 17) zu dessen Reinigung vorgesehen ist.

## Revendications

1. Guide pour ruban de coupe sans fin constituant une lame de scie ou de découpage qui passe sur au moins deux roulettes dans une machine à découper, ce guide (1) comportant deux bagues de guidage (2,3) montées sur la machine à découper, ces bagues étant montées ensemble en libre rotation sur un arbre (6) et présentant des faces latérales (10) opposées l'une à l'autre, entre lesquelles peut défiler la partie arrière du ruban de coupe (11,17), ces faces latérales (10) s'étendant parallèlement l'une à l'autre sur un plan perpendiculaire à l'axe de rotation des bagues, avec entre elles un écartement qui est légèrement plus fort que l'épaisseur du ruban de coupe, caractérisé en ce que lesdites bagues de guidage (2,3) peuvent être serrées d'une manière réglable sur le ruban de coupe (11,17), et en ce que les bagues de guidage (2,3), du côté intérieur de leurs faces latérales (10), sont pourvues d'une face de fond (13,19) ou encore d'une ou d'un certain nombre de bagues de fond (12,18,21), contre lesquelles peut défiler le bord frontal ou arrière du ruban de coupe (11,17).

2. Guide selon la revendication 1, caractérisé en ce que les faces latérales (10) et la face de fond (13,19) sont pourvues de surfaces dures à l'épreuve de l'usure.

3. Guide selon les revendications 1 et 2, caractérisé en ce qu'on a prévu une ou un certain nombre de bagues d'écartement (14,20) entre les bagues de guidage (2,3) pour le réglage de la distance entre les faces latérales.

4. Guide selon les revendications 1 à 3, destiné à être utilisé sur une machine à découper comportant une lame de découpage (11) à double tranchant, caractérisé en ce que la bague de fond (12) est pourvue d'une gorge en V (13) pour le tranchant arrière (Figs. 1 et 2).

5. Guide selon les revendications 1 à 4, caractérisé en ce qu'il est associé à une monture (24) prévue sur la machine à découper (16,6) et comportant une platine fixe (25) qui s'étend entre les faces latérales (10) jusqu'aux faces de fond (13,19) derrière la bande de coupe (11,17) pour assurer le nettoyage de la gorge du guide.

6. Guide selon les revendications 1 à 5, caractérisé en ce qu'une plaque fixe (26) est prévue pour recueillir la poussière sur la machine à découper, sur chaque face du ruban de coupe (11,17), pour en assurer le nettoyage.
